# EUROPÄISCHE PATENTSCHRIFT

(11) **EP 1 774 190 B1**
(45) Veröffentlichungstag und Bekanntmachung des Hinweises auf die Patenterteilung: **21.10.2009**
(21) Anmeldenummer: 04763885.3
(22) Anmeldetag: 06.08.2004
(51) Int. Cl.: F16D 3/205

(54) **GLEICHLAUFDREHGELENK**
ROTARY HOMOKINETIC JOINT
JOINT HOMOCINETIQUE ROTATIF

(43) Veröffentlichungstag der Anmeldung: 18.04.2007
(73) Patentinhaber: Ifa Technologies GmbH, 39340 Haldensleben (DE)
(72) Erfinder: BONGARTZ, Peter, 53757 Sankt Augustin (DE)
(74) Vertreter: Dallmeyer, Georg
(86) Internationale Anmeldenummer: PCT/EP2004/008855
(87) Internationale Veröffentlichungsnummer: WO 2006/015610

(56) Entgegenhaltungen:
- GB-A- 2 226 102
- US-A- 4 773 890
- US-A1- 2002 032 063
- US-A1- 2003 073 501

## Beschreibung

Die vorliegende Erfindung betrifft ein Gleichlaufdrehgelenk nach dem Oberbegriff des Anspruchs 1.

Gleichlaufdrehgelenke sind hinlänglich bekannt und werden im Antriebsstrang von Fahrzeugen, beispielsweise in lenkbaren, angetriebenen Achsen und zum Ausgleich der Fahrzeugfederung an den angetriebenen Rädern, verwendet.

Derartige Gleichlaufdrehgelenke haben den Vorteil, dass unter Beibehaltung einer gleichförmigen, rüttelfreien Torsionsübertragung ein relativ großer Winkel zwischen Antriebsteil und Abtriebsteil des Gelenkes ermöglicht werden kann.

Gleichlaufdrehgelenke sind beispielsweise aus den Offenlegungsschriften DE 4210894 A1 und DE 10206733 A1 bekannt. In diesen Druckschriften wird jeweils ein Gleichlaufdrehgelenk der Tripodebauart beschrieben, bei denen Wälzlager mit einer eine Krümmung aufweisende Außenfläche in Bahnen des Gelenkaußenteils eingesetzt sind. Die seitlichen Führungsflächen der Bahnen weisen dabei eine an das Wälzlager angepasste Krümmung auf, so dass sich die Wälzlager jeweils an einer Kontaktstelle in der Führungsbahn des Gelenkaußenteils abstützen.

Nachteilig bei diesem Stand der Technik ist, dass die geometrische Form der seitlichen Führungsflächen der Bahnen aufgrund der Krümmung fertigungstechnisch von großem Aufwand sind. Darüberhinaus herrscht an den Kontaktstellen unter Belastung eine recht hohe Hertzsche Pressung (Beanspruchung bei Berührung zweier Körper nach der Theorie von Hertz), so dass es an diesen Stellen zu Materialermüdung kommen kann. Ferner hat das Wälzlager in der Bahn relativ viel Spiel, den sogenannten backlash, das zur Kippbewegung des Lagers in der Bahn und somit zu unruhigem Lauf des Drehgelenkes führen kann. Das Gleichlaufdrehgelenk gemäß der Offenlegungsschrift DE 102 06 733 A1 weist ferner einen an die Krümmung der Gelenkzapfen des Gelenkinnenteils angepassten Innenring des Wälzlagers auf, so dass höhere Kippkräfte durch den Gelenkzapfen auf das Wälzlager einwirken.

Weitere Gleichlaufdrehgelenke sind aus US 4,773,590 und gattungsgemäße US 2002/0032063 A1 bekannt.

Es ist daher die Aufgabe der vorliegenden Erfindung, ein Gleichlaufdrehgelenk der eingangs genannten Art derart weiterzuentwickeln, das eine geringe Hertzsche Pressung zwischen Wälzlager und Gelenkaußenteil ermöglicht, dabei aber ein geringes Spiel des Lagers in der Führungsbahn ermöglicht und die Nachteile des Standes der Technik vermeidet.

Zur Lösung dieser Aufgabe dienen die Merkmale des Anspruchs 1.

Die Erfindung sieht in vorteilhafter Weise vor, dass die in dem Gelenkaußenteil angeordneten, jeweils zwei gegenüberliegende seitliche Führungsflächen zur Führung des Wälzlagers aufweisende Führungsbahnen derart ausgestaltet sind, dass jede seitliche Führungsfläche aus mindestens zwei unter einem bestimmten Winkel zueinander verlaufenden linearen Flächen besteht, derart, dass ein in eine Führungsbahn eingeführtes Wälzlager sich auf mindestens zwei Kontaktstellen entsprechend der Belastungsrichtung auf einer seitlichen Führungsfläche der Führungsbahn abstützt. Die in Belastungsrichtung auftretende Kraft wird auf diese Weise auf zwei unterschiedliche Kontaktstellen verteilt, so dass die Hertzsche Pressung an den Kontaktstellen zwischen Wälzlageraußenfläche und Führungsfläche der Führungsbahn verringert wird. Darüberhinaus kann ein geringes backlash realisiert werden, so dass ein gleichmäßiger Lauf des Gleichlaufdrehgelenkes ermöglicht wird. Aufgrund der geometrisch einfachen linearen Flächen der seitlichen Führungsflächen der Führungsbahnen ist das Gelenkaußenteil relativ einfach und kostengünstig herzustellen.

Erfindungsgemäß weisen die Wälzlageraußenflächen des Wälzlagers eine Krümmung in einer orthogonal zur Äquatorialebene des Wälzlagers verlaufenden Ebene auf, deren Radius größer ist, als der Außenradius in der Äquatorialebene des Wälzlagers. Auf diese Weise wird ermöglicht, dass die Kontaktstellen zwischen der Wälzlageraußenfläche und der Führungsfläche aufgrund des größeren Radius vergrößert werden, wodurch eine geringere Hertzsche Pressung an den Kontaktstellen vorherrscht.

In einer anderen Weiterbildung eines Gleichlaufdrehgelenkes ist vorgesehen, dass die Wälzlageraußenfläche des Wälzlagers kugelförmig ist, wobei der Mittelpunkt der Kugelform auf der Mittelachse des Wälzlagers liegt. Dies hat den Vorteil, dass die Wälzlageraußenfläche aufgrund der Kugelform einfach und mit großer Genauigkeit zu fertigen ist, durch dass ein geringer Spalt und ein geringes Spiel zwischen Wälziageraußenfläche und Führungsflächen ermöglicht werden kann. Darüberhinaus ist ein gleichmäßiges Anliegen des Wälzlagers an der seitlichen Führungsfläche möglich, wodurch die mindestens zwei Kontaktstellen zwischen seitlicher Führungsfläche und Wälzlageraußenfläche gleichmäßig belastet werden.

In einer bevorzugten Weiterbildung der Erfindung ist vorgesehen, dass der Winkel der zueinanderverlaufenden linearen Flächen der seitlichen Führungsfläche an die Krümmung der Wälzlageraußenfläche angepasst ist. Auf diese Weise ist eine besonders gute Anlage der Führungsbahn an die Wälzlageraußenfläche möglich, wodurch das backlash sehr gering gehalten werden kann.

Vorzugsweise ist vorgesehen, dass die linearen Flächen der seitlichen Führungsfläche an den Kontaktstellen des Wälzlagers bei Kontakt jeweils eine Tangentialebene zu der Krümmung der Wälzlageraußenfläche bilden.

In einer besonders bevorzugten Ausführungsform bildet die Verbindungslinie von dem Mittelpunkt der Krümmung der Wälzlageraußenfläche zu einer der Kontaktstellen zwischen Wälzlageraußenfläche und seitlicher Führungsfläche mit der Äquatorebene des Wälzlagers einen Winkel, der zwischen 0,5° und arcsin[B/(2·r)]-0,5°, vorzugsweise zwischen 2° und arcsin[B/(2·r)]-2° beträgt, wobei r der Radius der Krümmung der Wälzlageraußenfläche und B die Breite des Wälzlagers in axialer Richtung des Wälzlagers ist. Auf diese Weise wird sichergestellt, dass die Kontaktstellen zwischen Wälzlageraußenfläche und seitlicher Führungsfläche zu den Seitenkanten des Wälzlagers einen genügend großen Abstand haben, so dass es zu keinen Ausbrüchen des Materials an der Wälzlageraußenfläche kommt. Darüberhinaus befinden sich die beiden Kontaktstellen an der Wälzlageraußenfläche in einem genügenden Abstand, um eine Kippstabilität des Wälzlagers in der Führungsbahn zu gewährleisten.

In einer besonders bevorzugten Ausführungsform ist vorgesehen, dass ein in eine Führungsbahn eingeführtes Wälzlager zwischen der Wälzlageraußenfläche und den seitlichen Führungsflächen ein Spiel von maximal 0,2 mm, vorzugsweise maximal 0,1 mm aufweist. Dadurch ist es möglich, dass bei einer geringen Kippneigung des Wälzlagers in der Führungsbahn eine ausreichende Schmierung zwischen Führungsbahn und Wälzlager möglich ist, so dass das Wälzlager problemlos linear in der Führungsbahn verschoben werden kann.

In einer besonders bevorzugten Ausführungsform ist vorgesehen, dass das Wälzlager an den Stirnkanten abgerundet ist und dass die Wälzlageraußenfläche eine hervorgehobenen, von den Stirnkanten abgesetzte Fläche bildet. Eine derartige hervorgehobene Fläche ermöglicht eine einfache Herstellung derartiger Wälzlager mit einer für den gleichmäßigen und störungsfreien Lauf des Wälzlagers in der Führungsbahn notwendigen geschlichteten Oberfläche der Wälzlageraußenfläche.

Die Erfindung sieht in einer bevorzugten Ausführungsform vor, dass zwischen den seitlichen Führungsflächen der Führungsbahn und den Wälzlageraußenflächen jeweils ein Schmiermittelkanal angeordnet ist. Dieser kann sich zwischen den Kontaktpunkten der Wälzlageraußenflächen mit den seitlichen Führungsflächen befinden. Durch das Vorsehen des Schmiermittelkanals ist auf eine einfache Art und Weise sichergestellt, dass das Wälzlager in den Führungsbahnen stets ausreichend geschmiert und somit ein gleichmäßiger Lauf der Wälzlager in den Führungsbahnen ermöglicht wird.

Vorzugsweise ist vorgesehen, dass die Drehzapfen des Gelenkinnenteils jeweils eine zur Achse des Drehzapfens koaxiale Fassform aufweisen. Die Fassform weist vorzugsweise in zwei zueinander orthogonalen Ebenen kreisförmige Krümmungen der Außenfläche auf. Der Radius der Krümmung der Außenfläche in der Ebene der Achse ist dabei vorzugsweise kleiner als der Radius der Fassform in der Äquatorialebene orthogonal zur Achse des Drehzapfens. Durch diese kreisförmige Krümmung wird ein einfaches Einfügen des Drehzapfens in den Innenring des Wälzlagers ermöglicht. Darüber hinaus wird die beim Anwinkeln des Gleichlaufdrehgelenkes resultierende Kippbewegung des Drehzapfens im Wälzlagerinnenring verbessert.

Das Wälzlager weist eine Innenfläche auf, wobei die Innenfläche und ein Drehzapfen des Gelenkinnenteils aneinander angepasst sind, derart, dass die Drehzapfen linear in axialer Richtung des Wälzlagers verschiebbar ist. Durch die Möglichkeit der linearen Verschiebung des Drehzapfens in dem Wälzlager wird eine geringere Axialkraft auf das Wälzlager ausgeübt, wodurch die Kippgefahr des Wälzlagers verringert wird. Darüberhinaus kann der Drehzapfen besonders einfach in das Wälzlager eingefügt werden. Die Herstellung und Feinbearbeitung von derartigen Innenflächen kann darüber hinaus relativ einfach und kostengünstig vorgenommen werden.

Das Wälzlager kann aus einem Wälzlagerinnenring und einem Wälzlageraußenring mit dazwischen angeordneten Wälzkörpern bestehen, wobei der Wälzlagerinnenring und der Wälzlageraußenring gegeneinander in axialer Richtung des Wälzlagers fixiert sind. Dadurch ist es möglich, die Wälzlager schon vor dem Anordnen auf dem Gelenkinnenteil zusammenzubauen, wodurch die Montage des Gleichlaufdrehgelenkes vereinfacht wird. In einer bevorzugten Ausführungsform sind die Wälzkörper im Wälzlageraußenring fixiert. Dadurch kann beim Zusammenbau des Wälzlagers der Wälzlagerinnenring auf einfache Art und Weise in den Wälzlageraußenring geschoben werden, derart, dass sich die Wälzkörper zwischen Wälzlageraußenring und Wälzlagerinnenring befinden.

In einer vorteilhaften Weiterbildung wird der Wälzlagerinnenring gegenüber dem Wälzlageraußenring mit Hilfe eines Sprengringes und/oder eines Flachringes fixiert. Alternativ kann der Wälzlagerinnenring gegenüber dem Wälzlageraußenring mit Hilfe eines eingepressten Ringes fixiert werden. Beide Alternativen bieten eine einfache Möglichkeit, den Wälzlagerinnenring gegenüber dem Wälzlageraußenring zu fixieren. Da der Drehzapfen in einer Ausführungsform in dem Innenring des Wälzlager linear in axialer Richtung verschiebbar ist, treten zwischen Wälzlagerinnenring und Wälzlageraußenring keine großen axialen Kräfte auf, so dass entsprechend die Spreng-, Flach- und/oder eingepressten Ringe ebenfalls keine großen Axialkräfte aufnehmen müssen. Ferner ist es mit Hilfe dieser Fixierung möglich, das Wälzlager auf eine einfache Art und Weise vor dem Einbau in das Gleichlaufdrehgelenk zu montieren, so dass dieses als eine Einheit eingebaut werden kann.

In einer bevorzugten Weiterführung der Erfindung weist die Außenfläche des Gelenkaußenteils eine kreiszylindrische oder eine tripodische Form auf.

Im Folgenden wird unter Bezugnahme auf die Fign. die Erfindung im näheren beschrieben. Dabei zeigen:
- Fig. 1: eine Explosionsdarstellung eines erfindungsgemäßen Gleichlaufdreh- gelenkes in perspektivischer Ansicht,
- Fig. 2: einen Schnitt durch ein erfindungsgemäßes Gelenkaußenteil mit eingesetztem Gelenkinnenteil und Wälzlagern in schematischer Darstellung,
- Fig. 3: einen Schnitt durch ein Ausführungsbeispiel eines Wälzlagers in Detailansicht,
- Fig. 4: einen Schnitt durch ein anderes Ausführungsbeispiel eines erfindungsgemäßen Wälzlagers,
- Fig.5: eine detaillierte Teilansicht eines in einer Führungsbahn eingeführten Wälzlagers, und
- Fig. 6: eine Detailansicht eines auf einen Drehzapfen aufgesetzten Wälzlagers.

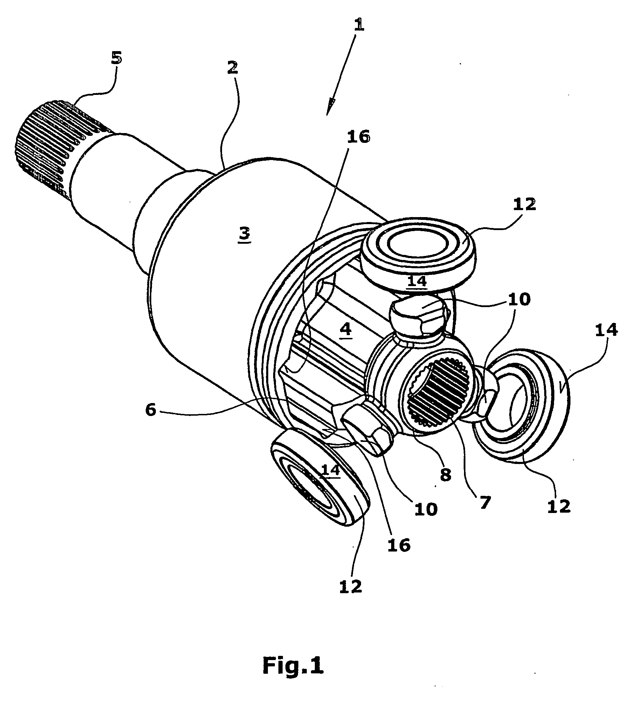

In Fig. 1 wird ein erfindungsgemäßes Gleichlaufdrehgelenk 1 in einer Explosionsdarstellung gezeigt. Das Gleichlaufdrehgelenk besteht aus einem topfförmigen Gelenkaußenteil 2 und einem Gelenkinnenteil 8. Das Gelenkaußenteil 2 weist am distalen Ende eine Welle 5 mit Vielkeilverzahnung auf, die zum Anschluss an Antriebswellen auf der Achsantriebsseite oder auch zum Anschluss an eine Abtriebswelle dienen kann.

Das Gelenkaußenteil 2 weist eine Außenfläche 3 und eine Innenfläche 4 auf. Über den Umfang der Innenfläche 4 sind mindestens drei sich in Axialrichtung des Gelenkaußenteils 2 erstreckende Führungsbahnen 6 gleichmäßig verteilt eingearbeitet. In dem dargestellten Ausführungsbeispiel weist die Außenfläche 3 eine kreiszylindrische Form auf. Alternativ kann die Außenfläche des Gelenkaußenteils 2 auch eine tripodische Form, bzw. eine Tulpenform, aufweisen. Die kreiszylindrische Form hat jedoch den Vorteil, dass sie sehr einfach herzustellen ist.

Das Gelenkinnenteil 8 weist eine ringförmige Struktur auf. Im Inneren ist ein Kranz 7 mit einer Vielkeilverzahnung angeordnet, an die eine Antriebs- oder Abtriebswelle angeschlossen werden kann.

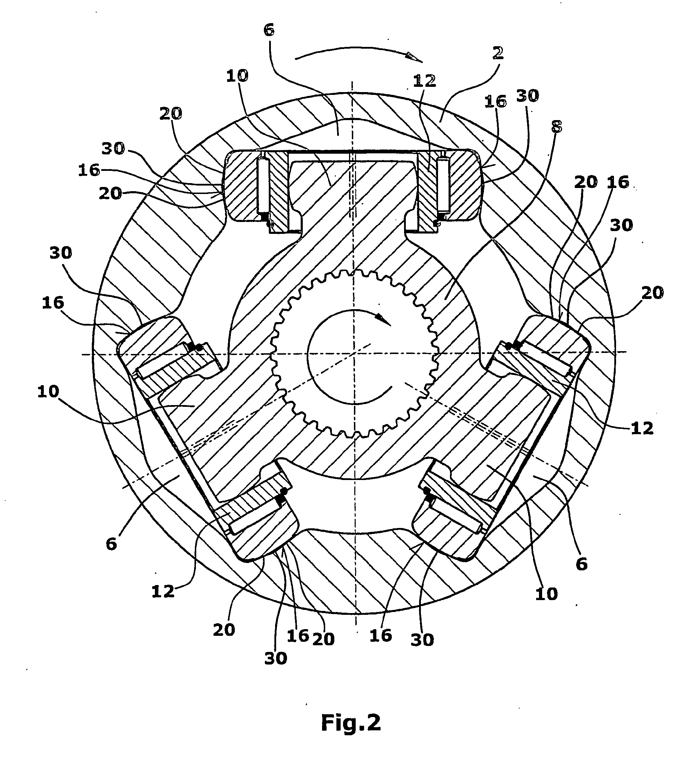

Das Gelenkinnenteil 8 der Fig. 2 weist entsprechend der Anzahl der Führungsbahnen 6 des Gelenkaußenteils 2 radial unter einem gegenseitigen Winkel von 120° abstehende Drehzapfen 10 auf. Die in der Fig. 2 gezeigte bevorzugten Ausführungsform hat drei Führungsbahnen 6 und drei Drehzapfen 10, wobei das Gelenkinnenteil 8 die Form eines Tripodesterns aufweist.

Auf die Drehzapfen 10 werden Wälzlager 12 aufgeschoben. Die Führungsbahnen 6 des Gelenkaußenteils 2 und die Wälzlager 12 sind derart aneinander angepasst, dass das Gelenkinnenteil 8 mit aufgesetzten Wälzlagern 12 in das Gelenkaußenteil 2 eingeschoben werden kann, derart, dass die Wälzlager 12 linear in axialer Richtung des Gleichlaufdrehgelenkes 1 in den Führungsbahnen 6 des Gelenkaußenteils 2 verschiebbar sind. Dabei werden die Wälzlager 12 von den seitlichen Führungsflächen 16 der Führungsbahnen 6 geführt, wobei die Wälzlager 12 mit den Wälzlageraußenflächen 14 entlang der seitlichen Führungsflächen 16 gleiten.

In Fig. 2 ist ein erfindungsgemäßes Gleichlaufdrehgelenk im Schnitt dargestellt. Die Wälzlager 12 sind auf die Drehzapfen 10 des Gelenkinnenteils 8 aufgesetzt und zusammen mit dem Gelenkinnenteil 8 in das Gelenkaußenteil 2 eingeschoben worden. In dem in Fig. 2 dargestellten Ausführungsbeispiel stellt der Gelenkaußenteil 2 den Antriebsteil des Gleichlaufdrehgelenkes 1 dar, während der Gelenkinnenteil 8 ein Abtriebsteil ist. Das Gelenkaußenteil 2 wird entsprechend der mit dem Pfeil angedeuteten Drehrichtung angetrieben. Entsprechend dieser Belastungsrichtung stoßen die Führungsflächen 16 der Führungsbahnen 6 gegen die Wälzlageraußenfläche 14 der Wälzlager 12. Dabei existieren zwischen jeder seitlichen Führungsflächen 16 einer Führungsbahn 6 und der Wälzlageroberfläche 14 eines Wälzlagers 12 jeweils mindestens zwei Kontaktstellen 20. Auf diese Weise kann eine Drehbewegung von dem Gelenkaußenteil 2 auf das Gelenkinnenteil 8 übertragen werden, was ebenfalls mit einem Pfeil der Drehrichtung angedeutet ist.

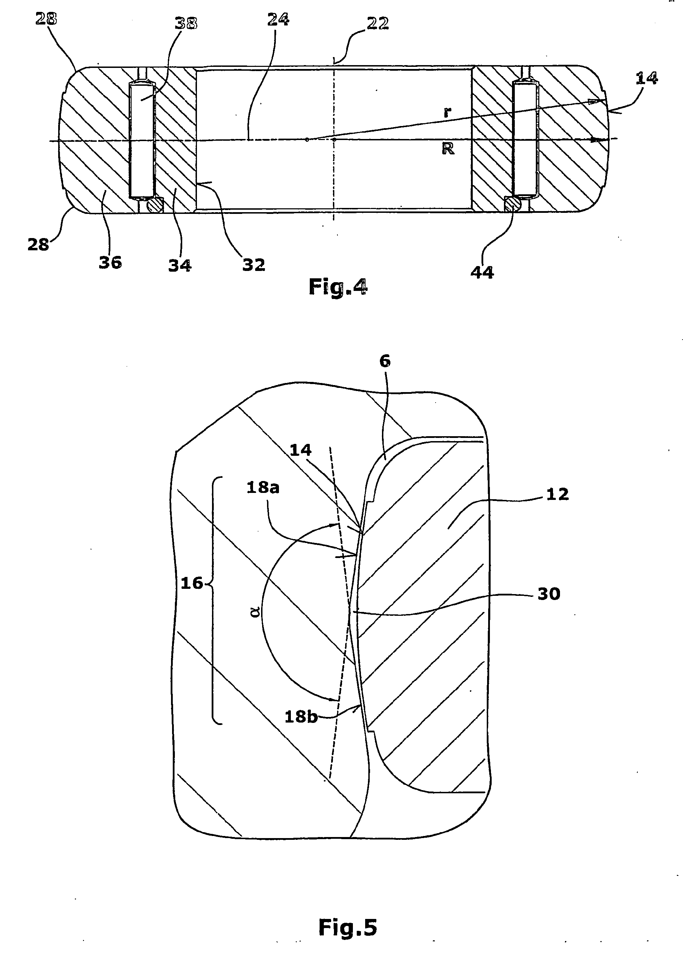

Zum besseren Verständnis des Abstützmechanismus ist in Fig. 5 eine Detailansicht einer Führungsbahn 6 mit einem eingeführten Wälzlager 12 im unbelasteten Zustand schematisch dargestellt. Die seitliche Führungsfläche 16 besteht im dargestellten Beispiel aus zwei unter einem bestimmten Winkel α zueinander verlaufenden linearen Flächen 18a und 18b. Die Wälzlageraußenfläche 14 weist eine Krümmung mit einem konstanten Radius auf, an die der Winkel α der linearen Flächen 18a und 18b derart angepasst ist, dass die linearen Flächen 18a und 18b jeweils an den Kontaktflächen 20 eine Tangentialebene zu der Krümmung der Wälzlageraußenfläche bilden. Der Spalt zwischen der seitlichen Führungsfläche 16 und der Wälzlageraußenfläche 14 ist im Bereich der Berührungskante der beiden linearen Flächen 18a und 18b erweitert, so dass ein Schmiermittelkanal 30 gebildet wird.

Aufgrund der mindestens zwei Kontaktstellen 20 zwischen der Führungsfläche 16 und der Wälzlageraußenfläche 14 wird die zu übertragende Kraft gleichmäßig auf beide Kontaktstellen 20 aufgeteilt, so dass an den Kontaktstellen 20 eine im Vergleich zum Stand der Technik geringere Hertzsche Pressung herrscht. Darüberhinaus wird die Kippstabilität des Wälzlagers 12 in der Führungsbahn 6 erhöht, da das Spiel zwischen der Führungsbahn 6 und dem Wälzlager 12 besonders klein gehalten werden kann. Da die seitlichen Führungsflächen 18a und 18b in Längsrichtung linear ausgeführt sind, können diese einfach hergestellt werden und besonders gut geschlichtet werden. Dadurch ist ein Spiel bzw. eine Spaltgröße von max. 0,2 mm, teilweise sogar max. 0,1 mm, möglich.

Wie am besten aus Fig. 4 ersichtlich weist die Form der Wälzlageraußenfläche 14 zwei unterschiedliche Radien R und r auf. Der Radius R beschreibt den Radius des Wälzlagers 12 in der Äquatorialebene 24 orthogonal zur Axialachse des Wälzlagers. Er beschreibt demnach den Nenndurchmesser (max. Außendurchmesser) des Wälzlagers 12. Die Krümmung der Wälzlageraußenfläche 14 Wälzlagers 12 In der Bildebene der Fig. 4 weist den Radius r auf. In dem in Fig. 4 dargestellten Ausführungsbeispiel ist der Radius r größer als der Radius R. Gegenüber einer Ausgestaltungsform, bei der die Radien R und r gleich groß sind, so dass die Wälzlageraußenfläche 14 eine zu der Äquatorialebene symmetrische Kugelschicht einer Kugel mit einem Mittelpunkt auf der Mittelachse 22 des Wälzlagers 12 beschreibt, ist es jedoch von Vorteil, wenn der Radius r der Krümmung der Wälzlageraußenfläche 14 in axialer Richtung des Wälzlagers 12 möglichst groß gewählt ist, da auf diese Weise die Kontaktstellen 20 zwischen Wälzlageraußenfläche 14 und seitlicher Führungsfläche 16 der Führungsbahnen 6 vergrößert werden und somit die Hertzsche Pressung an den Kontaktstellen 20 verringert wird.

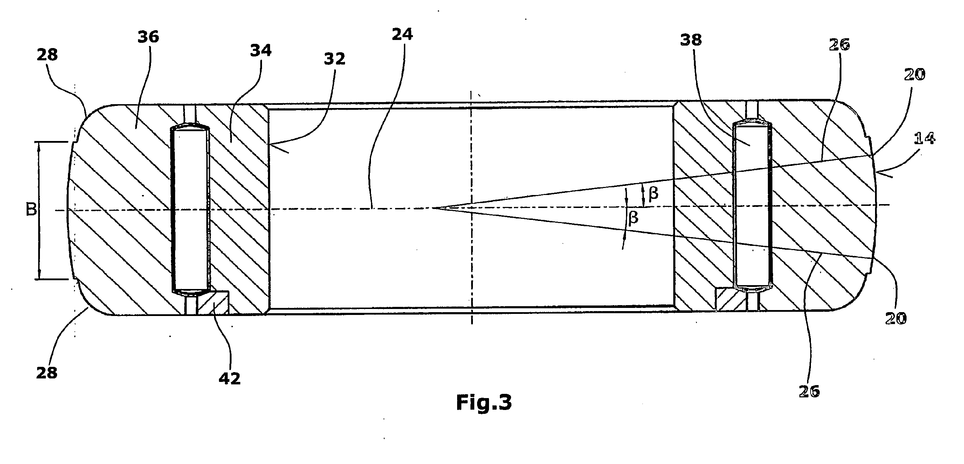

Wie am besten in Fig. 3 zu sehen ist, weisen die Wälzlager 12 abgesetzte Stirnkanten 28 auf, so dass die Wälzlageraußenfläche 14 eine hervorgehobene von den Stirnkanten 28 abgesetzte Rollfläche bildet. In einem nicht dargestellten Ausführungsbeispiel sind die Stirnkanten 28 des Wälzlagers 12 nicht abgerundet, so dass sich die Wälzlageraußenfläche 14 bis zu den Stirnkanten 28 erstreckt. Das in Fig. 3 dargestellte Ausführungsbeispiel hat jedoch den Vorteil, dass die Wälzlageraußenfläche 14 aufgrund der Hervorhebung besonders gut fertigbearbeitet bzw. geschlichtet werden kann. Bei der Wahl des Winkels α zwischen den linearen Flächen 18a, 18b der seitlichen Führungsfläche 16 und des Radius r der Krümmung der Wälzlageraußenfläche 14 ist zu beachten, dass die Kontaktstellen 20 zwischen der Wälzlageraußenfläche 14 und der seitlichen Führungsfläche 16 möglichst weit auseinanderliegen sollen, um eine möglichst hohe Kippstabilität des Wälzlagers in der Führungsbahn zu gewährleisten, jedoch nur so nah an den Stirnkanten 28 bzw. an den seitlichen Kanten der Wälzlageraußenfläche 14 liegen dürfen, dass es zu keinen Materialausbrüchen an der Wälzlageraußenfläche 14 aufgrund der Druckbelastung an den Kontaktstellen 20 kommen kann.

Bevorzugterweise bildet die Verbindungslinie 26 von dem Mittelpunkt der Krümmung zu einer der Kontaktstellen 20 zwischen Wälzlageraußenfläche 14 und der seitlichen Führungsfläche 16 mit der Äquatorebene 24 des Wälzlagers 12 einen Winkel β, der in den Bereich zwischen 0,5° und arcsin[B/(2·r)]-0,5° liegt. In einem besonders bevorzugten Ausführungsbeispiel liegt der Winkel β zwischen 2° und arcsin[B/(2·r)]-2° Dabei beschreibt r den Radius der Krümmung und B wie in Fig. 3 dargestellt, die Breite der Wälzlageraußenfläche in axialer Richtung des Wälzlagers 12.

Wie aus Fign. 3, 4 und 6 ersichtlich bestehen die Wälzlager 12 aus einem Wälzlagerinnenring 34 und einem Wälzlageraußenring 36. Zwischen den Wälzlagerringen sind Wälzkörper 38 angeordnet. Der Wälzlagerinnenring 34 besitzt eine Innenfläche 32, wobei die Innenfläche 32 und die Drehzapfen 10 des Gelenkinnenteils 8 derart aneinander angepasst sind, dass der Gelenkzapfen 10 auf der Innenfläche 32 entlanggleiten kann und somit in dem Wälzlager 12 kippen bzw. gegenüber dem Wälzlager 12 linear verschoben werden kann.

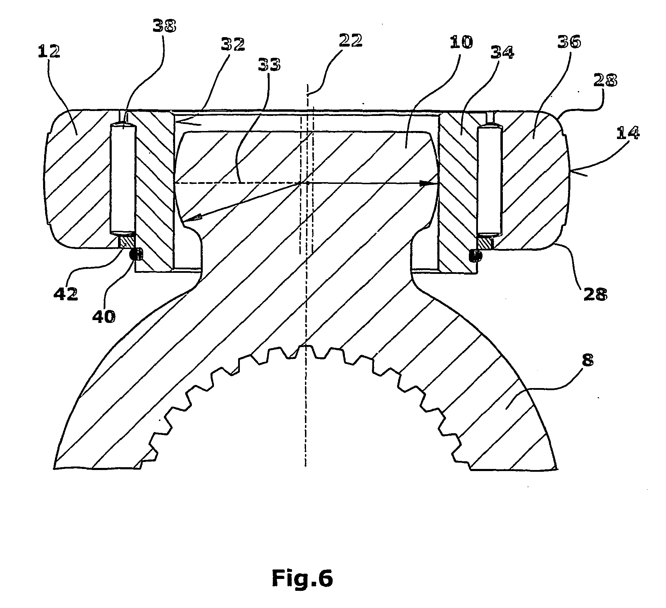

Der Drehzapfen 10 weist in dem in Fig. 6 dargestellten Ausführungsbeispiel eine Fassform auf, bei der der Radius der Krümmung in axialer Richtung des Drehzapfens kleiner ist, als der Radius des Drehzapfens in der Äquatorebene 33 des Drehzapfens. Mit anderen Worten, der Radius der Krümmung ist kleiner als der den Nenndurchmesser des Drehzapfens 10 bestimmende Radius. Dieser sogenannte Radius-Offset ist in Fig. 6 schematisch durch die parallel zur Mittellinie 22 des Drehzapfens 10 geführten Linien angedeutet. Diese Fassform hat den Vorteil, dass die Drehzapfen 10 leichter in dem Wälzlager 12 kippbar ist und somit während der Kippbewegung geringere Kräfte auf das Wälzlager 12 ausübt. Dadurch wird die Kippneigung des Wälzlagers 12 in der Führungsbahn 6 gering gehalten.

Die Wälzlager 12 können verschieden ausgeführt sein. Dabei sind die Wälzlagerinnenringe 34 stets gegenüber den Wälzlageraußenringen 36 in axialer Richtung des Wälzlagers festgelegt. Vor dem Zusammenbau eines Wälzlagers 12 werden die Wälzkörper 38 im Wälzlageraußenring 36 fixiert. Danach wird der Wälzlagerinnenring 34 in den Wälzlageraußenring 36 geschoben. Wie in Fig. 3 dargestellt, kann der Wälzlagerinnenring 34 mit Hilfe eines Flachringes gegenüber dem Wälzlageraußenring 36 fixiert werden. Da zwischen Wälzlagerinnenring 34 und Wälzlageraußenring 36 keine großen Axialkräfte auftreten, reicht ein derartiger Flachring 42 zur Fixierung des Wälzlagerinnenringes 34 gegenüber dem Wälzlageraußenring 36 aus. Alternativ kann wie in Fig. 4 dargestellt, der Wälzlagerinnenring mit Hilfe eines eingepressten Ringes 44 fixiert werden. In einem in Fig. 6 dargestellten dritten Ausführungsbeispiel des Wälzlagers wird der Wälzlagerinnenring 34 mit einem Flachring 42 und einem Sprengring 40 gegenüber dem Wälzlageraußenring 36 fixiert.

Selbstverständlich können die einzelnen Merkmale der vorliegenden Erfindung auch unabhängig voneinander realisiert werden. Die in der Figurenbeschreibung zu Fig. 4 beschriebene Form der Wälzlageraußenfläche 14 kann auch in anderen als erfindungsgemäß ausgestalteten Führungsbahnen eingesetzt werden. Auch können die fassförmigen Drehzapfen 10 in anderen als den dargestellten Wälzlagern 12 verwendet werden. Darüberhinaus ist die Anordnung von Wälzlagerinnenring 34 und Wälzlageraußenring 36 und deren Fixierung zueinander nicht an die Form der Wälzlageraußenfläche 14 oder den Drehzapfen 10 gebunden.

## Patentansprüche

1. Gleichlaufdrehgelenk (1) bestehend aus
- einem Gelenkaußenteil (2) mit einer Außenfläche (3) und einer Innenfläche (4), wobei das Gelenkaußenteil (2) mindestens drei über den Umfang der Innenfläche (4) gleichmäßig verteilte und sich in Axialrichtung erstreckende Führungsbahnen (6) aufweist,
- einem Gelenkinnenteil (8) mit mindestens drei über den Umfang gleichmäßig verteilten und sich in radialer Richtung erstreckenden Drehzapfen (10), und
- zwischen Gelenkaußenteil (2) und Gelenkinnenteil (8) angeordneten, auf den Drehzapfen (10) gelagerten Wälzlagern (12), wobei jedes Wälzlager (12) jeweils eine zwecks linearer Verschiebung des Gelenkinnenteils (8) in axialer Richtung an die Führungsbahnen (6) des Gelenkaußenteils (2) angepasste Wälzlageraußenfläche (14) aufweist,
wobei die Führungsbahnen (6) jeweils zwei gegenüberliegende seitliche Führungsflächen (16) zur Führung des Wälzlagers (12) in axialer Richtung aufweisen,
**dadurch gekennzeichnet,**
**dass** jede seitliche Führungsfläche (16) aus mindestens zwei unter einem bestimmten Winkel (α) zueinander verlaufenden linearen Flächen (18a, 18b) besteht, derart,
**dass** ein in eine Führungsbahn (6) eingeführtes Wälzlager (12) sich auf mindestens zwei Kontaktstellen (20) entsprechend der Belastungsrichtung auf einer seitlichen Führungsfläche (16) der Führungsbahn (6) abstützt, und
**dass** die Wälzlageraußenfläche (14) des Wälzlagers (12) eine Krümmung in einer orthogonal zur Äquatorialebene (24) des Wälzlagers (12) verlaufenden Ebene aufweist, deren Radius (r) größer als der Außenradius (R) des Wälzlagers (12) in der Äquatorialebene (24) ist.

2. Gleichlaufdrehgelenk nach Anspruch 1, **dadurch gekennzeichnet, dass** der Winkel (α) der zueinander verlaufenden linearen Flächen (18a, 18b) der seitlichen Führungsfläche (16) an die Krümmung der Wälzlageraußenfläche (14) angepasst ist.

3. Gleichlaufdrehgelenk nach Anspruch 1 oder 2, **dadurch gekennzeichnet, dass** die linearen Flächen (18a, 18b) der seitlichen Führungsfläche (16) an den Kontaktstellen (20) des Wälzlagers (12) bei Kontakt jeweils eine Tangentialebene zu der Krümmung der Wälzlageraußenfläche (14) bilden.

4. Gleichlaufdrehgelenk nach einem der Ansprüche 1 bis 3, **dadurch gekennzeichnet, dass** die Verbindungslinie (26) von dem Mittelpunkt der Krümmung zu einer der Kontaktstellen (20) zwischen Wälzlageraußenfläche (14) und seitlicher Führungsfläche (16) mit der Äquatorebene (24) des Wälzlagers (12) einen Winkel (β) bildet, der zwischen 0,5° und arcsin[B/(2·r)]-0,5°, vorzugsweise zwischen 2° und arcsin[B/(2·r)]-2° beträgt, wobei r der Radius der Krümmung und B die Breite der Wälzlageraußenfläche in axiale Richtung des Wälzlagers (12) ist.

5. Gleichlaufdrehgelenk nach einem der Ansprüche 1 bis 4, **dadurch gekennzeichnet, dass** ein in eine Führungsbahn (6) eingeführtes Wälzlager (12) zwischen Wälzlageraußenfläche (14) und den seitlichen Führungsflächen (18a, 18b) ein Spiel von maximal 0,2 mm, vorzugsweise maximal 0,1 mm, aufweist.

6. Gleichlaufdrehgelenk nach einem der Ansprüche 1 bis 5, **dadurch gekennzeichnet, dass** das Wälzlager (12) an den Stirnkanten (28) abgerundet ist und, dass die Wälzlageraußenfläche (14) eine hervorgehobene, von den Stirnkanten (28) abgesetzte Fläche bildet.

7. Gleichlaufdrehgelenk nach einem der Ansprüche 1 bis 6, **dadurch gekennzeichnet, dass** zwischen den seitlichen Führungsflächen (16) der Führungsbahnen (6) und den Wälzlageraußenflächen (14) jeweils ein Schmiermittelkanal (30) angeordnet ist.

8. Gleichlaufdrehgelenk nach einem der Ansprüche 1 bis 7, **dadurch gekennzeichnet, dass** die Drehzapfen (10) des Gelenkinnenteils (8) jeweils eine zur Achse des Drehzapfens (10) koaxiale Fassform aufweisen, wobei die Fassform vorzugsweise in zwei zueinander orthogonalen Ebenen kreisförmige Krümmungen der Außenfläche aufweist.

9. Gleichlaufdrehgelenk nach einem der Ansprüche 1 bis 8, **dadurch gekennzeichnet, dass** das Wälzlager (12) eine Innenfläche (32) aufweist, wobei die Innenfläche (32) und ein Drehzapfen (10) des Gelenkinnenteils. (18) aneinander angepasst sind, derart, dass der Drehzapfen (10) linear in axialer Richtung des Wälzlagers (12) verschiebbar ist.

10. Gleichlaufdrehgelenk nach einem der Ansprüche 1 bis 9, **dadurch gekennzeichnet, dass** ein Wälzlager (12) aus einem Wälzlagerinnenring (34) und einem Wälzlageraußenring (36) mit dazwischen angeordneten Wälzkörpern (38) bestehen, wobei der Wälzlagerinnenring (34) und der Wälzlageraußenring (36) gegeneinander in axialer Richtung des Wälzlagers fixiert sind.

11. Gleichlaufdrehgelenk nach Anspruch 10, **dadurch gekennzeichnet, dass** die Wälzkörper (38) im Wälzlageraußenring (36) fixiert sind.

12. Gleichlaufdrehgelenk nach Anspruch 10 oder 11, **dadurch gekennzeichnet, dass** der Wälzlagerinnenring (34) gegenüber dem Wälzlageraußenring (36) mit Hilfe eines Sprengringes (40) und/oder eines Flachringes (42) fixiert ist.

13. Gleichlaufdrehgelenk nach Anspruch 10 oder 11, **dadurch gekennzeichnet, dass** der Wälzlagerinnenring (34) gegenüber dem Wälzlageraußenring (36) mit Hilfe eines eingepressten Ringes (44) fixiert ist.

14. Gleichlaufdrehgelenk nach einem der Ansprüche 1 bis 13, **dadurch gekennzeichnet, dass** die Außenfläche (3) des Gelenkaußenteils (2) eine kreiszylindrische Form oder tripodische Form aufweist.

## Claims

1. A rotary homokinetic joint (1), consisting of
- an outer joint part (2) having an outer surface (3) and an inner surface (4), said outer joint part (2) comprising at least three guide tracks (6) evenly distributed across the periphery of the inner surface (4) and extending in the axial direction,
- an inner joint part (8) comprising at least three pivots (10) evenly distributed across the periphery and extending in the radial direction, and
- antifriction bearings (12), arranged between the outer joint part (2) and the inner joint part (8) and borne on the pivots (10), each antifriction bearing (12) comprising an antifriction bearing outer surface (14) which is adapted to the guide tracks (6) of the outer joint part (2) for the purpose of linear displacement of the inner joint part (14) in the axial direction,
- said guide tracks (6) comprising two opposite lateral guide surfaces (16) each for guiding the antifriction bearing (12) in the axial direction,
**characterized in**
**that** each lateral guide surface (16) is made up of at least two linear surfaces (18a,18b) extending at a defined angle (α) in relation to each other in such a manner
**that** an antifriction bearing (12) inserted into a guide track (6) is supported in at least two contact areas (20) on a lateral guide surface (16) of the guide track (6) corresponding to the direction of loading, and
**that** the antifriction bearing outer surface (14) of the antifriction bearing (12) has a curvature in a plane extending orthogonally to the equatorial plane (24) of the antifriction bearing (12), the radius (r) of said curvature being larger than the outer radius (R) in the equatorial plane (24) of the antifriction bearing (12).

2. The rotary homokinetic joint according to claim 1, **characterized in that** the angle (α) of the linear surfaces (18a,18b) of the lateral guide surface (16), extending towards each other, is adapted to the curvature of the antifriction bearing outer surface (14).

3. The rotary homokinetic joint according to claim 1 or 2, **characterized in that**, in the event of contact, the linear surfaces (18a,18b) of the lateral guide surface (16) respectively form a tangential plane to the curvature of the antifriction bearing outer surface (14) at the contact areas (20) of the antifriction bearing (12).

4. The rotary homokinetic joint according to one of claims 1 to 3, **characterized in that** the connecting line (26) from the center of the curvature to one of the contact areas (20) between the antifriction bearing outer surface (14) and the lateral guide surface (16) forms an angle (β) with the equatorial plane (24) of the antifriction bearing (12) which amounts to between 0.5° and arcsin [B/(2·r)]-0.5°, preferably between 2° and arcsin [B/(2·r)]-2°, where r is the radius of curvature and B is the width of the antifriction bearing outer surface in the axial direction of the antifriction bearing (12).

5. The rotary homokinetic joint according to one of claims 1 to 4, **characterized in that** an antifriction bearing (12) inserted into a guide track (6) has a clearance of 0.2 mm at maximum, preferably of 0.1 mm at maximum, between the antifriction bearing outer surface (14) and the lateral guide surfaces (18a,18b).

6. The rotary homokinetic joint according to one of claims 1 to 5, **characterized in that** the antifriction bearing (12) is rounded at the end edges (28) and that the antifriction bearing outer surface (14) forms a raised surface stepped from the end edges (28).

7. The rotary homokinetic joint according to one of claims 1 to 6, **characterized in that** between the lateral guide surfaces (16) of the guide tracks (6) and the antifriction bearing outer surfaces (14), a lubricant channel (30) is respectively arranged.

8. The rotary homokinetic joint according to one of claims 1 to 7, **characterized in that** the pivots (10) of the inner joint part (8) have a barrel shape coaxial to the axis of the pivot (10) each, the barrel shape preferably having circular curvatures of the outer surface in two planes orthogonal to each other.

9. The rotary homokinetic joint according to one of claims 1 to 8, **characterized in that** the antifriction bearing (12) has an inner surface (32), said inner surface (32) and a pivot (10) of the inner joint part (18) being adapted to each other in such a manner that the pivot (10) is linearly displaceable in the axial direction of the antifriction bearing (12).

10. The rotary homokinetic joint according to one of claims 1 to 9, **characterized in that** an antifriction bearing (12) is made up of an antifriction bearing inner ring (34) and an antifriction bearing outer ring (36) with roll bodies (38) arranged therebetween, the antifriction bearing inner ring (34) and the antifriction bearing outer ring (36) being fixed with respect to each other in the axial direction of the antifriction bearing.

11. The rotary homokinetic joint according to claim 10, **characterized in that** the roll bodies (38) are fixed in the antifriction bearing outer ring (36).

12. The rotary homokinetic joint according to claim 10 or 11, **characterized in that** the antifriction bearing inner ring (34) is fixed with respect to the antifriction bearing outer ring (36) by means of a spring ring (40) and/or a flat ring (42).

13. The rotary homokinetic joint according to claim 10 or 11, **characterized in that** the antifriction bearing inner ring (34) is fixed with respect to the antifriction bearing outer ring (36) by means of a pressed-in ring (44).

14. The rotary homokinetic joint according to one of claims 1 to 13, **characterized in that** the outer surface (3) of the outer joint part (2) has a circularly cylindrical or a tripodal shape.

## Revendications

1. Joint homocinétique rotatif (1) formé par
- une partie externe du joint (2) avec une face externe (3) et une face interne (4), la partie externe du joint (2) comprenant au moins trois chemins de guidage (6) uniformément repartis sur la périphérie de la face interne (4) et s'étendant dans la direction axiale,
- une partie interne du joint (8) avec au moins trois tourillons (10) uniformément repartis sur la périphérie et s'étendant dans la direction axiale, et
- des roulements à rouleaux situés entre la partie externe du joint (2) et la partie interne du joint (8) et supportés sur les tourillons (10), chaque roulement à rouleaux (12) respectivement comprenant une face externe du roulement à rouleaux (14) adaptée aux chemins de guidage (6) de la partie externe du joint (2) pour le déplacement linéaire de la partie interne du joint (8) dans la direction axiale,
- les chemins de guidage (6) respectivement comprenant deux faces de guidage (16) latérales, opposées l'une à l'autre, pour le guidage du roulement à rouleaux (12) dans la direction axiale,
**caractérisé en ce que**
chaque face de guidage (16) latérale est formée par au moins deux faces linéaires (18a, 18b) s'étendant sous un angle (α) défini l'une par rapport à l'autre, de manière à ce que
un roulement à rouleaux (12), inséré dans un chemin de guidage (6), s'appui par au moins deux points de contact (20), en fonction de la direction de charge, sur une face de guidage (16) latérale du chemin de guidage (6), et
la face externe du roulement à rouleaux (14) dudit roulement à rouleaux (12) comprend une courbure dans un plan s'étendant orthogonalement par rapport au plan équatorien (24) du roulement à rouleaux (12), le rayon (r) étant supérieure au rayon externe (R) du roulement à rouleaux (12) dans le plan équatorien (24).

2. Joint homocinétique rotatif selon la revendication 1, **caractérisé en ce que** l'angle (α) des faces (18a, 18b) linéaires de la face de guidage (16) latérale, s'étendant l'une vers l'autre, est adapté à la courbure de la face externe du roulement à rouleaux (14).

3. Joint homocinétique rotatif selon la revendication 1 ou 2, **caractérisé en ce qu'**en cas de contact, les faces (18a, 18b) linéaires de la face de guidage (16) latérale respectivement forment un plan tangentiel à la courbure de la face externe du roulement à rouleaux (14) aux points de contact (20) du roulement à rouleaux (12).

4. Joint homocinétique rotatif selon l'une des revendications 1 à 3, **caractérisé en ce que** la ligne de jonction (26) à partir du centre de la courbure jusqu'à un des points de contact (20) forme un angle (β) avec le plan équatorien (24) du roulement à rouleaux (12) entre la face externe du roulement à rouleaux (14) et la face de guidage (16) latérale, ledit angle se situant entre 0,5° et arcsin[B/(2·r)]-2°, de préférence entre 2° et arcsin[B/(2·r)]-2°, où r est le rayon de la courbure et B est la largeur de la face externe du roulement à rouleaux dans la direction axiale du roulement à rouleaux (12).

5. Joint homocinétique rotatif selon l'une des revendications 1 à 4, **caractérisé en ce qu'**un roulement à rouleaux (12) inséré dans un chemin de guidage (6) présente un jeu de 0,2 mm au maximum, de préférence 0,1 mm au maximum, entre la face externe du roulement à rouleaux (14) et les faces de guidage (16) latérales (18a, 18b).

6. Joint homocinétique rotatif selon l'une des revendications 1 à 5, **caractérisé en ce que** le roulement à rouleaux (12) est arrondi aux bords de front (28) et que la face externe du roulement à rouleaux (14) forme une face en relief, étagée des bords de front (28).

7. Joint homocinétique rotatif selon l'une des revendications 1 à 6, **caractérisé en ce qu'**un canal de lubrifiant (30) est respectivement formé entre les faces de guidage (16) latérales des chemins de guidage (6) et les faces externes du roulement à rouleaux (14).

8. Joint homocinétique rotatif selon l'une des revendications 1 à 7, **caractérisé en ce que** les tourillons (10) de la partie interne du joint (8) respectivement ont une forme de tonneau coaxiale à l'axe du tourillon (10), la forme de tonneau préférentiellement comprenant deux courbures de la face externe, en forme de cercle dans deux plans orthogonaux l'un par rapport à l'autre.

9. Joint homocinétique rotatif selon l'une des revendications 1 à 8, **caractérisé en ce que** le roulement à rouleaux (12) comprend une face interne (32), ladite face interne (32) et un tourillon (10) de la partie interne du joint (18) sont adaptés l'un à l'autre de sorte que le tourillon (10) est déplaçable linéairement dans la direction axiale du roulement à rouleaux (12).

10. Joint homocinétique rotatif selon l'une des revendications 1 à 9, **caractérisé en ce qu'**un roulement à rouleaux (12) est formé par un anneau interne du roulement à rouleaux (34) et un anneau externe du roulement à rouleaux (36) avec des corps de rouleaux (38) interposés entre les deux, ledit anneau interne du roulement à rouleaux (34) et ledit anneau externe du roulement à rouleaux (36) sont fixés l'un par rapport à l'autre dans la direction axiale du roulement à rouleaux.

11. Joint homocinétique rotatif selon la revendication 10, **caractérisé en ce que** les corps de rouleaux (38) sont fixés dans ledit anneau externe du roulement à rouleaux (36).

12. Joint homocinétique rotatif selon l'une des revendications 10 ou 11, **caractérisé en ce que** ledit anneau interne du roulement à rouleaux (34) est fixé par rapport audit anneau externe du roulement à rouleaux (36) par un jonc (40) et/ou un anneau plat (42).

13. Joint homocinétique rotatif selon la revendication 10 ou 11, **caractérisé en ce que** ledit anneau interne du roulement à rouleaux (34) est fixé par rapport audit anneau externe du roulement à rouleaux (36) par un anneau (44) pressé là-dedans.

14. Joint homocinétique rotatif selon l'une des revendications 1 à 13, **caractérisé en ce que** la face externe (3) de la partie externe du joint (2) présente une forme circulaire cylindrique ou tripodique.
